# EUROPÄISCHE PATENTANMELDUNG

(11) **EP 2 275 347 A2**
(43) Veröffentlichungstag der Anmeldung: **19.01.2011**
(21) Anmeldenummer: 10006138.1
(22) Anmeldetag: 14.06.2010
(51) Int. Cl.: B64D 33/04

(54) **Geräuschreduziertes Flugzeugtriebwerk sowie Verfahren zur Verminderung von Geräuschemissionen eines Flugzeugtriebwerks**

(30) Priorität: 13.07.2009 DE 102009032841
(71) Anmelder: Rolls-Royce Deutschland Ltd & Co KG, 15827 Blankenfelde-Mahlow (DE)
(72) Erfinder: Todorovic, Predrag, 10437 Berlin (DE)
(74) Vertreter: Weber, Joachim

(57) **Zusammenfassung**

Die Erfindung bezieht sich auf ein Verfahren zur Verminderung von Geräuschemissionen eines eine Gasturbine (7) aufweisenden Flugzeugtriebwerks (3), bei welchem eine Schicht aus heißem Gas unterhalb des zumindest einen Bereichs des Flugzeugtriebwerks, welches, welches Geräusche emittiert, angeordnet wird.

## Beschreibung

Die Erfindung ein geräuschreduziertes Flugzeugtriebwerk sowie ein Verfahren zur Verminderung von Geräuschemissionen eines Flugzeugtriebwerks.

Die Geräuscherzeugung von Flugzeugtriebwerken stellt insbesondere aus Umweltgründen eine wichtige Thematik dar. Aus dem Stand der Technik sind vielfältige Vorgehensweisen vorbekannt, um die Geräuschemissionen zu vermindern. Diese werden entweder von den Flugzeugtriebwerken selbst oder von den Propellerfans oder weiteren Komponenten erzeugt.

Der Stand der Technik beschäftigt sich stets damit, den Schallwellen feste Hindernisse entgegenzusetzen, um die Geräuschemissionen (Lärm) zu dämpfen, zu absorbieren oder zu reflektieren, um die Energie der Schallwellen auf einen akzeptablen Wert zu reduzieren. Als Beispiele hierzu können Turbo-Fan-Triebwerke ebenso genannt werden, wie ummantelte Propeller, Geräuschdämmwände mit speziellen Oberflächen, mehrlagige Sandwich-Konstruktionen oder geschäumte und/oder strukturierte Oberflächen.

Alle aus dem Stand der Technik bekannten Maßnahmen erfordern zusätzliche Bauteile, komplexe Konstruktionen und eine Vielzahl von Teilen, die hinsichtlich ihrer Herstellung und der verwendeten Materialien kostenintensiv sind und zusätzliches Gewicht bringen. Weiterhin können sich durch die zusätzlichen Materialien Umweltbeeinträchtigungen ergeben.

Der Erfindung liegt die Aufgabe zugrunde, ein Flugzeugtriebwerk, insbesondere eines mit einer Gasturbine zu schaffen, welches bei einfachem Aufbau und kostengünstiger Herstellbarkeit geräuschvermindert arbeitet sowie ein Verfahren zur Verminderung von Geräuschemissionen eines Flugzeugtriebwerks bereitzustellen.

Die Aufgabe wird erfindungsgemäß durch die Merkmalskombination der unabhängigen Ansprüche gelöst, die jeweiligen Unteransprüche zeigen weitere vorteilhafte Ausgestaltungen der Erfindung.

Erfindungsgemäß ist somit vorgesehen, unterhalb des zumindest einen Geräusche emittierenden Bereichs des Flugzeugtriebwerks eine Gasschicht anzuordnen, welche eine höhere Temperatur aufweist, als die Temperatur der das Flugzeugtriebwerk durchströmenden oder umströmenden Luft (Gasströmung).

Durch die Schicht, welche eine höhere Temperatur aufweist oder heißer ist, als die das Flugzeugtriebwerk umströmende oder durchströmende Gasströmung, wird eine Abschirmung gebildet. Dabei wird am Übergang von kühlerer zu heißerer Luft ein Teil der Schallwelle reflektiert und nach oben abgeleitet. Da sich die Geräuschbeeinträchtigung stets nur nach unten auswirkt (Erdoberfläche), ist eine Reflektion nach oben gänzlich unschädlich. Weiterhin wird ein Teil der Schallwellen bzw. der Energie der Schallwellen beim Eintritt in die wärmere oder heißere Schicht gebrochen. Somit erfolgt an der Grenzschicht nicht ein linearer Übergang der Schallwellen, sondern diese werden vielmehr mit einem vorgegebenen Brechungsindex hinsichtlich ihrer Richtung gebrochen. Bei einem fliegenden Flugzeug bewirkt dies, dass die Schallwelle mit einem flacheren Winkel auf die Erdoberfläche auftritt. Dies wiederum führt zu einer größeren Wegstrecke und zu einer längeren Laufzeit der Schallwelle, wodurch die Energie der Schallwelle selbst vermindert wird. Die nunmehr nach einer längeren Laufzeit auf die Erdoberfläche auftretenden Schallwellen sind somit weniger intensiv und verursachen damit weitaus geringere Geräusche.

Bei der Erfindung wird die Schicht aus heißerem Gas bevorzugt durch den Abgasstrom des Flugzeugtriebwerks selbst gebildet. Damit sind keine zusätzlichen Maßnahmen erforderlich. Vielmehr wird das Abgas, beispielsweise einer Gasturbine, lediglich in geeigneter Weise schichtförmig oder teilschalenförmig ausgeleitet, um auf diese Weise die geräuschmindernde Schicht zu bilden. Es wird erfindungsgemäß somit das bereits vorhandene, als "Abfallprodukt" anzusehende Abgas zur Geräuschverminderung genutzt. Erfindungsgemäß ist es somit lediglich erforderlich, die Richtung und Anordnung der Abgasströmung passend zu wählen.

Erfindungsgemäß können somit die Geräusche erzeugenden Schallwellen, die sich an unterschiedlichen Baugruppen oder Bauelementen eines Flugzeugtriebwerks bilden, hinsichtlich ihrer Richtung und Ihrer Richtung und ihrer Intensität gezielt beeinflusst werden.

Durch geeignete Wahl der Schichtdicke sowie durch geeignete Ausbildung der Form sowie der Lage der Schicht ist es möglich, die Erfindung an unterschiedlichste Flugzeugtriebwerke und Bauformen von Flugzeugen anzupassen.

Erfindungsgemäß ergeben sich eine Reihe erheblicher Vorteile. Zum einen ist es auf effektive Weise möglich, die Geräuschemissionen zu reduzieren. Zum anderen sind keine zusätzlichen Bauteile oder sonstigen Maßnahmen erforderlich, vielmehr bewirkt der physikalische Effekt beim Übergang der Schallwelle von kühlerer Luft zu wärmerer Luft den erfindungsgemäßen Dämpfungseffekt. Somit ist es möglich, Flugzeugtriebwerke kostengünstiger, leichter und universeller einsetzbar auszubilden, als dies beim Stand der Technik der Fall ist.

Im Folgenden wird die Erfindung anhand eines Ausführungsbeispiels in Verbindung mit der Zeichnung beschrieben. Dabei zeigt:
- Fig. 1: eine Schnittansicht (schematisch) eines Teil eines Flugzeugrumpfs mit erfindungsgemäß ausgebildeten Triebwerken,
- Fig. 2: eine schematische Seitenansicht, analog der in Fig. 1 gezeigten Schnittansicht A-A, und
- Fig. 3: eine vergrößerte Detailansicht des Flugzeughecks gemäß Fig. 2.

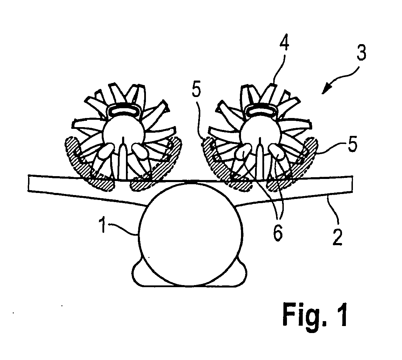

Die Fig. 1 zeigt in schematischer Schnittansicht einen Rumpf 1 eines Flugzeugs mit schematisch dargestellten Flügeln 2. Oberhalb der Flügel sind zwei Flugzeugtriebwerke 3 angeordnet, die beispielsweise als Turboprop- oder Turbojet-Triebwerke oder als Open-Rotor-Variante ausgebildet sein können und bei dem gezeigten Ausführungsbeispiele zwei hintereinander angeordnete Propeller mit Schaufeln 4 umfassen.

Weiterhin zeigt die Fig. 1 zwei halbschalenförmige, seitlich und unterhalb des Flugzeugtriebwerks 3 angeordnete Schichten 5 aus heißerer Luft, welche durch Abgase gebildet werden, die jeweils aus zumindest einem Abgasauslass 6 abgeleitet werden.

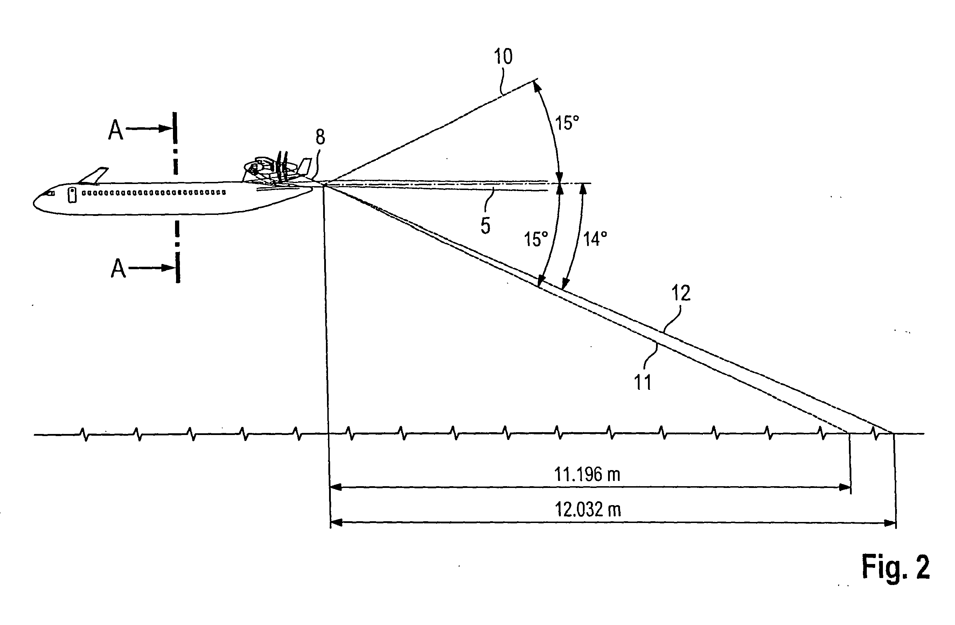

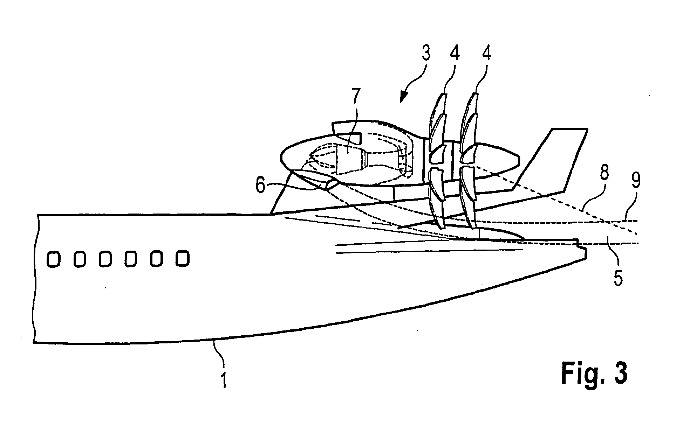

Wie sich aus den Fig. 2 und 3 ergibt, werden die Abgase einer Gasturbine 7 umgeleitet, so dass diese, in Flugrichtung gesehen, vorne am Flugzeugtriebwerk 7 durch die Abgasauslässe 6 abgeleitet werden. Es bildet sich somit die in Fig. 1 in der Vorderansicht gezeigte halbschalenförmige unterhalb des Flugzeugtriebwerks 3 angeordnete Schicht 5. Diese ist, da es sich um die Abgase handelt, weitaus heißer als die Umgebungsluft, welche das Flugzeugtriebwerk umströmt bzw. durchströmt.

Die Schicht 5 liegt somit unterhalb der Geräusche emittierenden Schallwellen. Eine derartige Schallwelle, welche durch die Schaufeln 4 erzeugt wird, ist schematisch mit dem Bezugszeichen 8 in Fig. 3 dargestellt.

Die Schallwelle 8 trifft auf eine Grenzschicht 9 zwischen der Umgebungsluft und der heißeren Schicht 5. Dabei ergibt sich der in Fig. 2 beschriebene Geräuschdämpfungseffekt. Ein Teil der Schallwelle 8 wird nach oben reflektiert, dieser reflektierte Teil der Schallwelle ist in Fig. 2 mit dem Bezugszeichen 10 zu sehen. Die Reflektion erfolgt beispielsweise in einem Winkel von 15°.

Der nicht reflektierte Teil der Schallwelle 8 wird durch den Durchtritt durch die heiße Schicht gebrochen. Es ergibt sich somit ein Verlauf, der in Fig. 2 mit dem Bezugszeichen 12 versehen ist. Durch die Brechung wird ein flacherer Winkel von beispielsweise 14°, zur Mittelachse der heißen Schicht 5 erhalten, während bei einer nicht-gebrochenen Schallwelle, wie durch das Bezugszeichen 11 angegeben, ein Winkel von 15° auftreten würde.

Die Fig. 2 zeigt beispielhaft eine Situation, in der das Flugzeug in einer Höhe von 3000m fliegt. Für diesen Beispielsfall ist ersichtlich, dass der Auftrittspunkt, bezogen auf den Durchtritt der Schallwelle 8 durch die Schicht 5 bei der gebrochenen Schallwelle 12032m vom Durchtrittspunkt entfernt den Erdboden erreicht, während eine nichtgebrochene Schallwelle bereits nach 11196m den Erdboden erreichen würde. Hieraus sind die verlängerte Laufzeit der Schallwelle und die sich hieraus ergebende Dämpfung ersichtlich.

Es ergibt sich somit erfindungsgemäß eine Geräuschreduzierung durch die Aufspaltung der Schallwelle 8 in einem reflektierten Teil 10 und einen gebrochenen Teil 12 sowie eine Reduzierung durch das spätere Auftreffen und die längere Laufzeit des gebrochenen Teils 12. Da die Schallwellenenergie zwischen der Schallquelle und dem Empfänger nach einer logarithmischen Funktion abnimmt, ergibt sich erfindungsgemäß eine Reduzierung des Geräusches, die weitaus größer ist, als eine lineare Funktion, die sich nur aus dem Abstand ergibt.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Bezugszeichenliste

- 1: Rumpf
- 2: Flügel
- 3: Flugzeugtriebwerk
- 4: Schaufel
- 5: Heiße Schicht
- 6: Abgasauslass
- 7: Gasturbine
- 8: Schallwelle
- 9: Grenzschicht
- 10: Reflektierter Teil der Schallwelle
- 11: Nicht-gebrochene Schallwellenrichtung
- 12: Gebrochene Schallwelle

## Patentansprüche

1. Verfahren zur Verminderung von Geräuschemissionen eines eine Gasturbine (7) aufweisenden Flugzeugtriebwerks (3), bei welchem eine Schicht aus heißem Gas unterhalb des zumindest einen Bereichs des Flugzeugtriebwerks, welches, welches Geräusche emittiert, angeordnet wird.

2. Verfahren nach Anspruch 1, **dadurch gekennzeichnet, dass** das Abgas des Flugzeugtriebwerks als heißes Gas der Schicht (5) verwendet wird.

3. Verfahren nach Anspruch 1 oder 2, **dadurch gekennzeichnet, dass** die Schicht (5) schalenartig angeordnet wird.

4. Verfahren nach einem der Ansprüche 1 bis 3, **dadurch gekennzeichnet, dass** die Schicht (5) aus heißem Gas mit einer höheren Temperatur als die das Flugzeugtriebwerk (3) umströmende oder durchströmende Luft ausgebildet wird.

5. Flugzeugtriebwerk mit einer Gasturbine, bei welchem zumindest ein Teil der Abgasströmung unter zumindest einem Geräusche emittierenden Bereich des Flugzeugtriebwerks (3) als Schicht (5) angeordnet ist.

6. Flugzeugtriebwerk nach Anspruch 5, **dadurch gekennzeichnet, dass** die Schicht (5) schalenartig ausgebildet ist.

7. Flugzeugtriebwerk nach einem der Ansprüche 5 oder 6, **dadurch gekennzeichnet, dass** die Temperatur der Schicht (5) höher als die Temperatur der durch oder um das Flugzeugtriebwerk (3) strömenden Luft ist.

8. Flugzeugtriebwerk nach einem der Ansprüche 5 bis 7, **dadurch gekennzeichnet, dass** dieses als Turboprop-Triebwerk ausgebildet ist.

9. Flugzeugtriebwerk nach einem der Ansprüche 5 bis 7, **dadurch gekennzeichnet, dass** dieses als Turbojet-Triebwerk ausgebildet ist.
